# EUROPÄISCHE PATENTANMELDUNG

(11) **EP 2 497 753 A1**
(43) Veröffentlichungstag der Anmeldung: **12.09.2012**
(21) Anmeldenummer: 11006007.6
(22) Anmeldetag: 22.07.2011
(51) Int. Cl.: C02F 1/68

(54) **Vorrichtung zur Herstellung und Dosierung von Calciumhypochlorit- und vergleichbaren Lösungen**

(30) Priorität: 27.01.2011 DE 202011014255 U
(71) Anmelder: INKA Holding und Immobilien GmbH & Co. KG, 97877 Wertheim (DE)
(72) Erfinder: INKA Holding und Immobilien GmbH & Co. KG, 97877 Wertheim (DE)

(57) **Zusammenfassung**

Vorrichtung zur Herstellung und Dosierung von Calciumhypochlorit- und vergleichbaren Lösungen

Vorrichtung zur genauen Herstellung und Dosierung von Calciumhypochlorit- und vergleichbaren Lösungen aus Granulat oder anderen Festform (1) und ein oder mehreren Flüssigkeiten (enthalten in 7 und 8), die unter anderem bei den Wasseraufbereitungsanlagen (z.B. Schwimmbäder), Trinkwasseraufbereitungsanlagen oder Abwasserbehandlungsanlagen zum Einsatz kommen mit der wesentlichen Kennzeichnung in der einfachen, kompakten, geschlossenen und modularen Ausführung mit sicherer Handhabung (1-5, 7.7, 15-17) der Einsatzstoffe, der genauen Zudosierung der Ausgangsstoffe (5, 7, 8), somit der genauen Herstellung und Dosierung der notwendigen Lösung sowie der umweltschonenden Entsorgung der Spülemulsion (11, 12) und kontrollierten Wegführung der Prozessluft (13, 14).

## Beschreibung

Bei der vorliegenden Erfindung handelt es sich um eine Vorrichtung zur genauen Herstellung und Dosierung von Calciumhypochlorit- und vergleichbaren Lösungen aus Granulat oder anderen Festform und Flüssigkeit, die bei den Wasseraufbereitungsanlagen (u. a. für Schwimmbäder), Trinkwasseraufbereitungsanlagen oder Abwasserbehandlungsanlagen zum Einsatz kommen.

### Stand der Technik

Gegenwärtig gibt es verschiedene Ausführungen von Vorrichtungen zur Herstellung und Dosierung von Calciumhypochlorit-Lösung von denen einige in den Schriften:
DE 20 2006 014 698 U1 bzw. DE 10 2006 045 109 A1
DE 195 07 329 A1 / C2
DE 35 38 644 C1
EP 2 163 523 A1
DE 602 06 805 T2
und deren zitierte weitere Schriften:
US3456801
WO 99/43620
US 4,912,681
US 2002/0033364 A1
US 2004/0211731 A1
aufgeführt sind.

Bei der unter DE 20 2006 014 698 U1 bzw. DE 10 2006 045 109 A1 dargestellten Erfindung handelt es sich um eine Suspendiereinrichtung bei der der Vorratsbehälter kopfüber auf den mit einer Mehrzahl an Öffnungen versehenen und mit Sieben abgedeckten Deckel des Suspendierbehälters aufgesetzt wird und bei der das Wasser durch die Öffnungen direkt in den aufgesetzten Vorratsbehälter gesprüht wird. Die im Suspendierbehälter sich sammelnde Suspension wird mit Hilfe einer Schlauchpumpe abgesaugt und in eine sich im Bypass zur Umwälzleitung des Schwimmbeckens befindlichen Dosiereinrichtung geführt. Der Dosiereinrichtung wird zusätzlich Säure zugegeben um die wasserunlöslichen Bestandteile des Calciumhypochlorits aufzulösen.

Gattungsgemäße Vorrichtungen zu DE 20 2006 014 698 U1 bzw. DE 10 2006 045 109 A1 sind auch in den Patentschriften EP 2 163 523 A1 und DE 602 06 805 T2 beschrieben.

In der DE 195 07 329 A1 dargestellten Vorrichtung wird die Calciumhypochlorid-Suspension in einer Suspendiereinrichtung durch Verwendung von Calciumhypochlorid-Granulat und Wasser erzeugt und anschließend dem zu behandelnden Wasser zugeführt. Hierbei wird das Calciumhypochlorid-Granulat mit Hilfe einer pneumatischen Einrichtung aus dem Vorratsbehälter in die Suspendiereinrichtung geleitet. Um die wasserunlöslichen Bestandteile des Calciumhypochlorits aufzulösen wird der Dosiereinrichtung Säure zugeführt.

In der unter DE 35 38 644 C1 und US3456801 (A) beschriebenen Erfindungen wird das Granulat bzw. Feststoff über eine Schnecke dem Prozeß zugeführt.

Bei US3456801 (A) handelt es sich hierbei um fest installierte Trichter-Schnecke-Einheit bei der die Entnahme des bereits eingebrachten Feststoffes bei Wartungsarbeiten oder Anlagenstillstand nicht ohne größeren Aufwand und Materialverlust erfolgen kann. Bei DE 35 38 644 C1 ist die Trichter-Schnecke-Einheit am Vorratsbehälter direkt montierbar. Die elektrisch angeschlossene Schnecke muß hierbei, bei der Montage an den Vorratsbehälter, mitbewegt werden.

### Der Erfindung zugrunde liegendes Problem

Anlagen mit direkter Anbindung der Vorratsbehälter an die Vorrichtungen zur Herstellung und Dosierung von Calciumhypochlorit-Lösung haben dass Problem, dass die Einsatzstoffe von vornherein der Feuchtigkeit und Nässe unterworfen werden und bei Einsatz von Fördereinrichtungen wie beispielsweise eine Förderschnecke diese verstopfen. Auch die Arten der gewählten Ausführungen können keine genaue Herstellung der Lösung zulassen.

Hierbei entstehen des Öfteren bei zu niedrigem pH-Wert Bildungen von HCI-Gas und bei zu hohem pH-Wert vermehrte Kalkbildung. Da weder die Prozeßluft noch die Abfallstoffe kontrolliert abgeführt werden und die Anlagen keine in sich vollkommenen geschlossenen Systeme darstellen, gelangen sie so in die unmittelbare Umgebung dieser Anlagen und belasten hinzu noch die Umwelt. Dies alles stellt beim Umgang und der Wartung dieser Anlagen auch Gefahren für das Bedienpersonal dar. Auch weisen diese Anlagen keinen modularen Aufbau auf und kennen nur unterschiedliche Baugrößen.

### Die Erfindung

Dies wird mit der vorliegenden Erfindung gelöst.

Die Erfindung besteht im Wesentlichen in der einfachen, kompakten, geschlossenen und modularen Ausführung mit sicheren Handhabung der Einsatzstoffe, der genauen Zudosierung der Ausgangsstoffe, somit der genauen Herstellung und Dosierung der notwendigen Lösung sowie der umweltschonenden Entsorgung der Spülemulsion und kontrollierten Wegführung der Prozeßluft.

Die Vorrichtung zur Herstellung und Dosierung von Calciumhypochlorit-Lösung aus Granulat bzw. aus anderen Festform und Flüssigkeiten ist modular aufgebaut und arbeitet im Regelfall mit zwei parallel betriebenen "Reaktoren" in einem pseudoredundanten Betrieb. Um das Andocken der Vorratsgefäße mit Granulat oder anderen Festform an die Vorrichtung sauber und sicher zu gestalten, werden auf die jeweiligen Vorratsbehälter über Haltevorrichtungen zunächst je ein Trichter mit einer Absperrung montiert, anschließend mit Hilfe einer in der Vorrichtung integrierten Hebeeinheit in Position gebracht und direkt auf die Dosiereinrichtung aufgesetzt. Nach dem Aufsetzen wird die jeweilige Absperrung geöffnet damit das Granulat bzw. der Ausgangsstoff in anderer Festform in die Dosiereinrichtung des Feststoffes gelangt. Das Granulat bzw. der Ausgangsstoff in anderer Festform wird sodann mittels je einer Fördereinrichtung in die jeweiligen Reaktoren 1 & 2 gefördert. Im Reaktor wird der Ausgangsfeststoff mit konditioniertem Wasser von oben, von der Seite und von unten besprüht, wobei die untere Besprühung zur Reinigung des Reaktorbodens dient. Um beim Sprühvorgang einen Überdruck zu vermeiden ist am oberen Bereich des Reaktors ein Ventilator angeschlossen, der die Verdrängungsluft über einen Filter wegführt. Der Filter am Ventilator besitzt eine Feuchtigkeitssperre mit einem Sammelbehälter und einem Ablashahn. Durch den Einsatz einer Schnecke als Fördereinrichtung und der zusätzlicher Unterdruckerzeugung durch den am Reaktor angeschlossenen Ventilator wird hierbei eine Feuchtigkeits- bzw. Naß-Sperre realisiert, die verhindert, dass Feuchtigkeit bzw. Nässe in den Vorratsbehälter gelangt. Die beim Sprühvorgang sich bildende Lösung gelangt anschließend in den nachfolgenden Lösebehälter. In dem Lösebehälter wird der pH-Wert gemessen und mittels Zugabe von konditioniertem Wasser auf einen pH-Sollwert korrigiert bzw. geregelt. Dadurch, dass die Vorrichtung im Chargenbetrieb betrieben wird und der Lösebehälter sowie die zur Herstellung der Lösung erforderliche Reaktionszeit genügend groß ist, kann der für die Lösung entscheidender pH-Wert genau eingestellt werden. Der Boden des Lösebehälters ist zur Mitte hin mit einem Gefälle ausgeführt, um die sich bei der Herstellung der Lösung am Boden des Lösungsbehälters sedimentierten unlöslichen Feststoffe beim Spülvorgang leichter wegspülen zu können. Die Entnahme der fertigen Lösung erfolgt im unteren Bereich des Lösebehälters und ist so ausgeführt, dass die in der Lösung befindlichen Sedimentstoffe nicht mit der Fertiglösung ausgetragen werden können. Aus diesem Grunde ist auch die Einlassöffnung im Deckel des Lösebehälters für die aus dem Reaktor zufliesende Lösung gegenüber der Auslassöffnung versetzt angebracht. Die Größe des Reaktors sowie des Lösebehälters ist so gewählt, dass der Reaktor bereits nach dem Sprühvorgang mit konditioniertem Wasser weitgehend leer wird und der Reaktor wie auch der Lösebehälter beim Spülvorgang unter geringstem Einsatz an Spülwasser vollkommen sauber wird. Zu diesem Zweck sind die Zuläufe für Spülwasser im Deckel des Lösebehälters zur inneren Behälterumrandung hin schräg angeordnet. Die Sediment-Lösung nach dem Spülvorgang gelangt in einen rückspülbaren Filter in dem die ungelösten Feststoffe abgetrennt werden und wenn notwendig vor oder danach in eine Neutralisationsanlage um so die Umweltbelastung zu vermeiden.

Die Steuerung der Vorrichtung erfolgt mittels einer SPS-Steuerung und mit den entsprechenden Schaltgeräten.

Die Steuerung beinhaltet unter anderem:
- Hand / Automatikbetrieb
- manuelle Einstellungen der Fahrweise über Wochenzeituhr
- als zusätzliche Funktion "Spülen der Dosierpumpen nach Ende des Badebetriebes".
- Manuelle Unterbrechung des Chargenbetriebes zum Auswechseln eines evtl. verstopften Reaktors
- Sicherheitsfunktionen wie Stromabschaltung, Leckagemeldung

Um die Vorrichtung noch wirtschaftlicher und handlicher zu gestalten wird auf die Füllstandsmessung (6) im Reaktor (7) verzichtet und das Wasser über die Zeit dem Reaktor (7) zugegeben. Die obere Zugabe des Wassers (7.5) und Versprühen über Düse (7.6) trägt zur weiteren Vereinfachung bei. Auch die Aufteilung der Füllstandsmessung (8.3) im Lösebehälter (8) in obere Füllstandsmessung (8.4) und untere Füllstandsmessung (8.5) trägt neben der günstigeren Investition zur sichereren Überwachung des Füllstandes im Lösebehälter bei. Die Verlegung des Entlüftungsstutzens (7.1) vom Reaktor (7) in den Lösebehälter (8) unter (7.8) und Anbringung einer Begleitheizung oberhalb des Reaktors zwischen der Dosiereinrichtung und dem Reaktor trägt dazu bei, dass die Feuchtigkeit gar nicht an die Dosiereinrichtung gelangt und dort zu Verklumpungen des Produktes führt.

### Vorteilhafte Wirkung der Erfindung

Die Herstellung und Dosierung von Lösungen gestaltet sich mit der vorliegenden Erfindung wesentlich leichter und genauer, so dass die Störfaktoren von vornherein weitgehenst vermieden werden.

Durch die einfache, kompakte und geschlossene Ausführung mit sicheren Handhabung der Einsatzstoffe und der umweltschonenden Entsorgung der Spülemulsion und kontrollierten Wegführung der Prozeßluft ist die Vorrichtung gegenüber anderen Anlagen wesentlich sicherer und umweltschonender.

Zudem ist die Anlage modular aufgebaut und kann problemlos beliebig erweitert werden.

### Weiterbildung der Erfindung

Vorteilhafte Ausgestaltung der Erfindung ist in dem Schutzanspruch 19 aufgeführt. Beim größeren modularen Aufbau kann statt der Dosiereinrichtung für die Ausgangsfeststoffe eine Chargenmenge über eine feste räumliche Einheit gebildet werden, um so den Ausgangsfeststoff auch über weite Strecken mit Hilfe von Förderluft zum Reaktor führen zu können.

### Darstellung der Erfindung

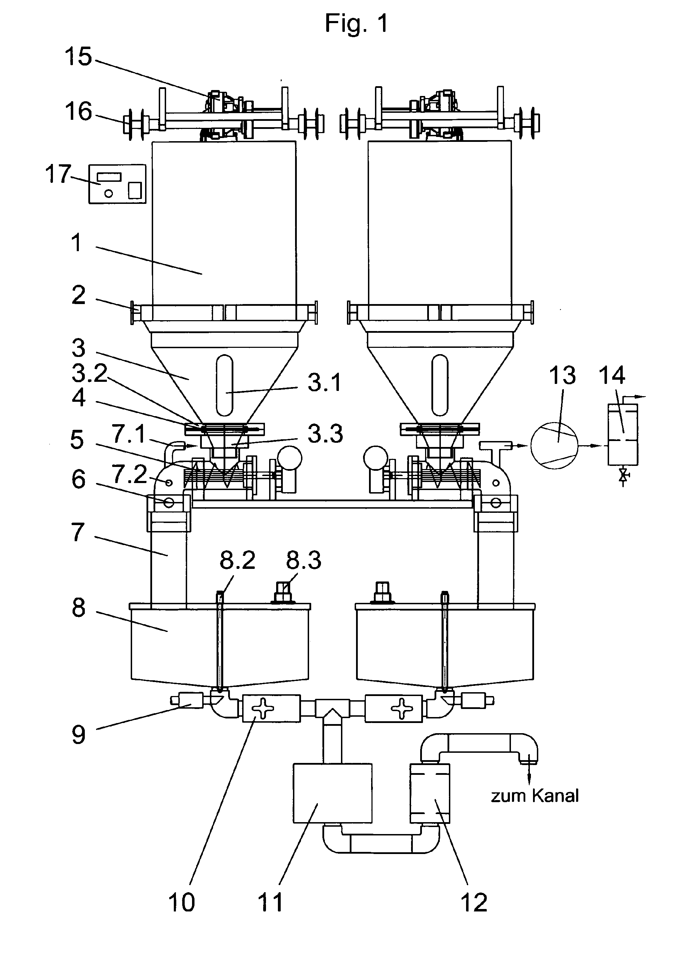

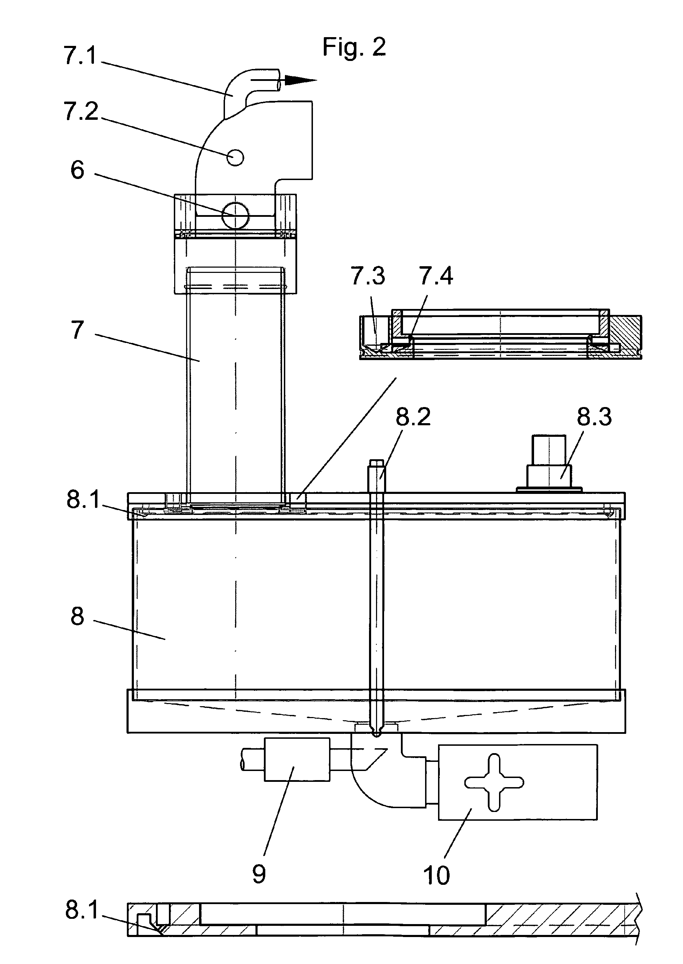

Die Vorrichtung ist in den Zeichnungen Fig. 1 und Fig. 2 dargestellt und ihre Funktionsweise unter Kapitel Erfindung näher beschrieben.

In der Zeichnung Fig. 1 ist der Gesamtaufbau und in der Zeichnung Fig. 2 der Reaktor mit dem Lösebehälter im Detail ersichtlich.

In der Zeichnung Fig. 1 ist der Gesamtaufbau und in der Zeichnung Fig. 2 der Reaktor mit dem Lösebehälter im Detail ersichtlich.

Die in der Zeichnung Fig. 1 dargestellte redundant aufgebaute Vorrichtung besteht aus je einem Vorratsbehälter (1) an die im Anlieferungszustand über Haltevorrichtungen (2) je ein Trichter (3) mit einer Absperrung (4) (hier Schieber) montiert wird. Danach wird die jeweilige Vorratsbehältereinheit zusammen mit der Absperrung (4) an den Halterungen mit Hilfe der installierten Hebeeinrichtung (15) über das Drehrad mit Gurtführung (16) gehoben, anschließend um 180° bei geschlossener Absperrung geschwenkt und an die Dosiereinheit (5) angedockt. Bei der vorliegenden Ausführung der Dosiereinheit handelt es sich um eine Förderschnecke, die den Feststoff aus dem Vorratsbehälter in den Reaktor (7) solange fördert bis die Füllstandsmessung (6, Fig.1 und 2) anspricht und die Dosierung ausschaltet. Nach Befüllung des Reaktors mit Feststoff wird über die obere Zuführöffnung (7.2, Fig.1 und 2) und den unteren Anschluß (7.3, Fig.1 und 2) mit den Zuführöffnungen (7.4, Fig.1 und 2) (konditioniertes) Wasser dem Reaktor zugegeben. Um einen Überdruck in der Vorrichtung zu vermeiden, wird mit der Zuführung des (konditionierten) Wassers gleichzeitig die Prozeßluft aus dem oberen Bereich des Reaktors über den Entlüftungsanschluß (7.1, Fig.1 und 2) mit Hilfe des Ventilators (13) und dem nachgeschalteten Filter (14) weggeführt. Die sich im Reaktor bildende Lösung bzw. Suspension gelangt danach zusammen mit geringen Anteilen an unlöslichen Feststoffen in den Lösebehälter (8) wo sie über eine pH-Elektrode (8.2, Fig. 2) gemessen wird und sich die unlöslichen Bestandteile der Suspension am Boden absetzen. Anschließend wird über die Öffnungen im Deckel des Lösebehälters (8.1, Fig. 2) konditioniertes Wasser solange zugeführt bis der erforderliche pH-Wert erreicht wird. Nach der Sedimentation der unlöslichen Bestandteile wird der Lösebehälter zur Entnahme der Lösung frei gegeben. Über die Absperrung (9) wird die Lösung aus dem Lösebehälter entnommen. Mögliche Entnahmen wären hierbei freier Auslauf, Dosierpumpen und Dosiereinrichtungen. Wie anfangs erwähnt ist die Vorrichtung in der Regel redundant aufgebaut und währen der eine Lösebehälter für die Entnahme der Lösung frei gegeben wird, wird der andere Lösebehälter gespült und die Lösung neu angesetzt. Der Spülvorgang erfolgt über die gleichen Öffnungen (8.1, Fig. 2) wie die Zugabe an konditioniertem Wasser. Die Spülemulsion gelangt über die Absperrung (10) in die Neutralisationsanlage (11) und anschließend über den rückspülbaren Filter (12) in den Kanal.

Die Vorrichtung beinhaltet eine SPS-Steuerung (17), ist vollautomatisch ausgeführt und erlaubt jederzeit Handeingriffe.

In Fig. 2 sind der Reaktor mit dem Lösebehälter für die Verdeutlichung der jeweiligen Schutzansprüche noch mal im Detail dargestellt.

Fig. 3 stellt die seitliche Ansicht des Trichters (3) dar.

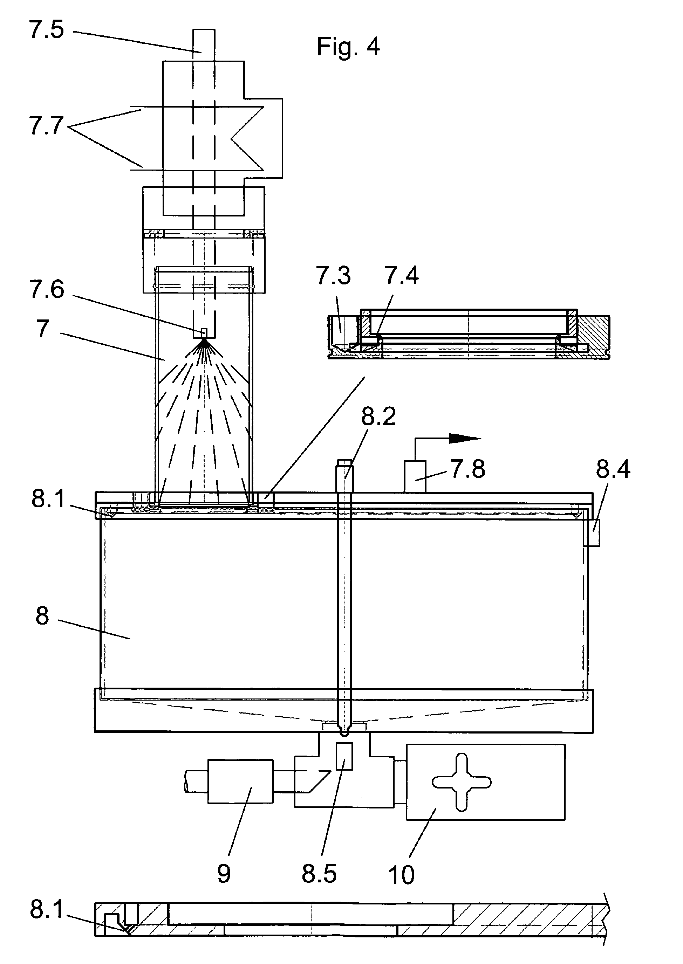

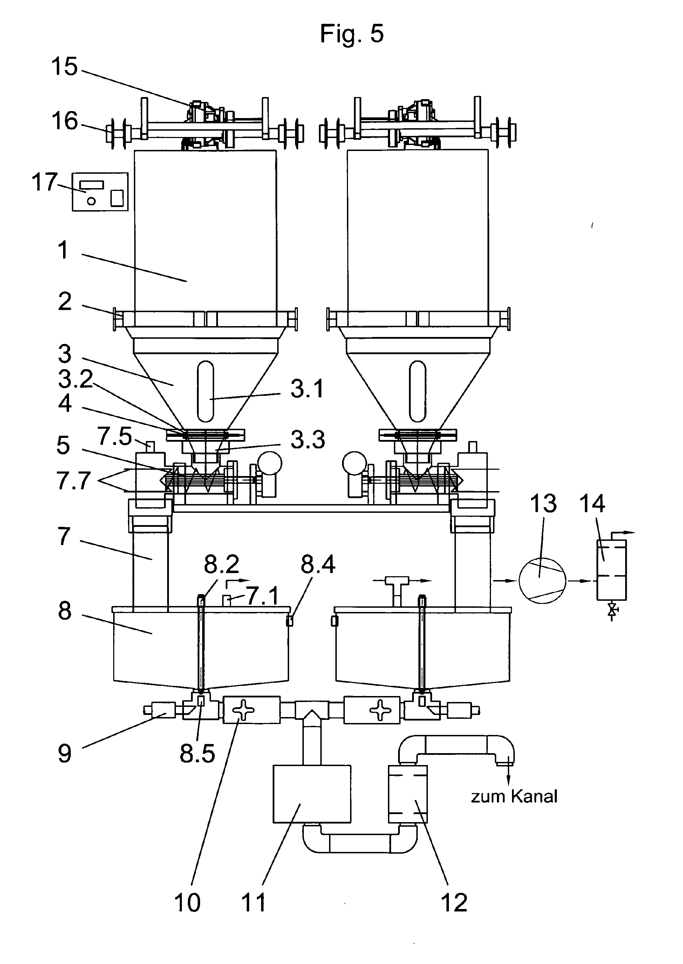

In den Zeichnungen Fig. 4 und Fig. 5 ist eine modifizierte Ausführung der Vorrichtung dargestellt und ihre Funktionsweise unter Kapitel Erfindung näher beschrieben.

Die Modifikation der vorliegenden Vorrichtung zur Herstellung und Dosierung von Calciumhypochlorit- und vergleichbaren Lösungen betrifft im Wesentlichen:
- Verlegung der Entlüftung (7.1 Fig. 1 und 2) vom Reaktor (7) in den Lösebehälter (8) unter (7.8, Fig. 4 und 5).
- Zudosierung der Ausgangsstoffe über Zeit und somit Wegfall der Füllstandsmessung (6, Fig. 1 und 2) im Reaktor (7) und Aufteilung der Füllstandsmessung (8.3, Fig.1 und2) im Lösebehälter (8) in obere Füllstandsmessung (8.4 Fig. 4 und 5) und untere Füllstandsmessung (8.5, Fig. 4 und 5).
- Obere Zugabe des Wassers über oberen Stutzen (7.5, Fig. 4 und 5) und versprühen über Sprühdüse (7.6, Fig. 4 und 5). Die Zugabe des Wassers erfolgt hierbei über Zeit.
- Anbringung einer Begleitheizung (7.7, Fig. 4 und 5) oberhalb des Reaktors (7) zwischen der Dosiereinrichtung und dem Reaktor.

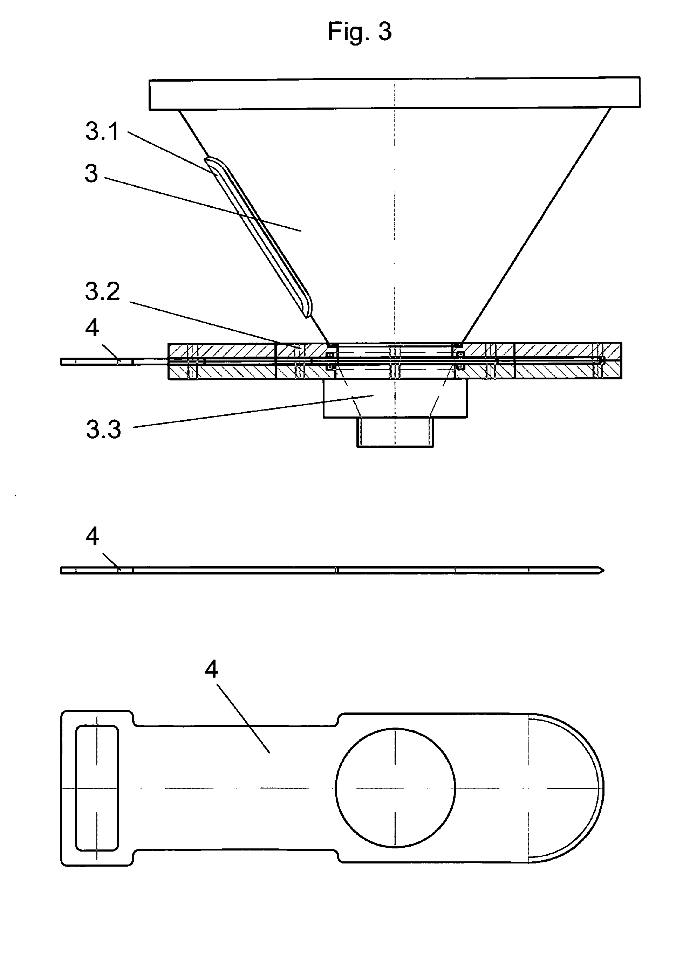

### Legende zu den Zeichnungen Fig. 1. Fig. 2, Fig. 3, Fig. 4 und Fig. 5

- 1: Vorratsbehälter
- 2: Halterung Vorratsbehältereinheit
- 3: Trichter
- 3.1: Schauglas
- 3.2: Schiebergehäuse
- 3.3: Auslaufstück des Trichters
- 4: Absperrschieber
- 5: Dosiereinrichtung
- 6: Füllstandsmessung
- 7: Reaktor
- 7.1: Entlüftungsleitung des Reaktors
- 7.2: Obere Wasserzugabe zum Reaktor
- 7.3: Untere Wasserzugabe zum Reaktor
- 7.4: Schräg sitzende Düsen bzw. Öffnungen
- 7.5: Obere Wasserzugabe zum Reaktor (modifizierte Ausführung)
- 7.6: Sprühdüse (modifizierte Ausführung)
- 7.7: Begleitheizung (modifizierte Ausführung)
- 8: Lösebehälter
- 8.1: Schräg sitzende Düsen für die Säure- und Spülwasserzufuhr zum Lösebehälter
- 8.2: pH Elektrode
- 8.3: Füllstandsmessung
- 8.4: Füllstandsmessung (modifizierte Ausführung)
- 8.5: Füllstandsmessung (modifizierte Ausführung)
- 9: Entnahmeabsperrung
- 10: Absperrung für Entleerung
- 11: Neutralisationseinrichtung
- 12: Rückspülbarer Filter
- 13: Ventilator
- 14: Filter mit Feuchtigkeitssperre
- 15: Ausziehbare Hebeeinrichtung
- 16: Drehrad mit Gurtführung
- 17: Steuerung

## Patentansprüche

1. Vorrichtung zur Herstellung und Dosierung von Calciumhypochlorit- und vergleichbaren Lösungen **dadurch gekennzeichnet,**
**dass** sie durch intensives Vermischen der Ausgangsstoffe und genaue Zuführung der ein oder mehreren konditionierten Flüssigkeiten ein genaues Einstellen der Konzentration ermöglicht, wodurch weder HCl-Gas noch Kalkbildung erfolgt, durch gezielte Luftführung und Feuchtigkeitssperren der Einsatzstoff nicht feucht wird und die Vorrichtung aus einfachen, sicheren und umweltfreundlichen Handhabung besteht.

2. Vorrichtung nach Anspruch 1. **dadurch gekennzeichnet,**
**dass** die Vorrichtung aus ein oder mehreren einheitlichen und modularen Einheiten aufgebaut ist, die Herstellung der Lösung kontinuierlich oder im Chargenbetrieb erfolgt und der Vorratsbehälter als stationär, Wechsel- oder Einmalbehälter ausgeführt werden kann.

3. Vorrichtung nach Anspruch 1. bis 2. **dadurch gekennzeichnet,**
**dass** der Vorratsbehälter mit einem an- und abbaubaren Trichter mit Absperrarmatur versehen ist und dieser Trichter mit Schauglas, Absperreinrichtung und Schieber ausgeführt ist.

4. Vorrichtung nach Anspruch 1. bis 3. **dadurch gekennzeichnet,**
**dass** der Vorratsbehälter für Granulat und andere Feststoffe und Trichter mit Absperrarmatur über eine Hebeeinrichtung in Position gebracht werden kann, die Hebeeinrichtung für Vorratsbehälter ausziehbar, fest oder lose ausgeführt werden kann und die horizontale und vertikale Bewegung der Hebeeinrichtung für Vorratsbehälter mechanisch, pneumatisch und elektrisch ausgeführt werden kann.

5. Vorrichtung nach Anspruch 1. bis 4. **dadurch gekennzeichnet,**
**dass** statt des Absperrschiebers im oder nach dem Trichter eine oder mehrere Kugelhähne, Quetschventile, Klappen oder andere Armaturen verwendet werden können.

6. Vorrichtung nach Anspruch 1. bis 5. **dadurch gekennzeichnet, dass** die Dosiereinrichtung für die in dem Vorratsbehälter befindliche Stoffe als elektrisch, pneumatisch oder hydraulisch ausgeführt werden kann.

7. Vorrichtung nach Anspruch 1. bis 6. **dadurch gekennzeichnet, dass** die Dosiereinrichtung für die in dem Vorratsbehälter befindliche Stoffe als eine oder mehrere Vibrationseinrichtungen und als zusätzliche Naß- und Feuchtigkeitssperre eine oder mehrere Schnecken, Hubkolben oder pneumatische Einrichtungen ausgeführt werden kann.

8. Vorrichtung nach Anspruch 1. bis 7. **dadurch gekennzeichnet, dass** die Zudosierung der Granulatmenge über eine Füllstandsmessung oder nach einer fest definierten Dosierzeit erfolgt und der Raum vor dem Reaktor durch eine Begleitheizung trocken gehalten wird.

9. Vorrichtung nach Anspruch 1. bis 8. **dadurch gekennzeichnet, dass** die Zuführung der Flüssigkeit zu dem jeweiligen Reaktor über ein oder mehrere Absperrungen und ein oder mehrere vertikale, seitliche oder schräg angeordnete Durchführungen mit/oder ohne Einrichtungen wie Düsen und dergleichen oder je einem durchgehenden Schlitz von oben und/oder von unten erfolgt.

10. Vorrichtung nach Anspruch 1. bis 9. **dadurch gekennzeichnet, dass** die Zuführung der Flüssigkeit im unteren Bereich des Reaktors vorwiegend zum Reinigen des Reaktorbodens dient und dem Reaktor und dem Lösebehälter zugeführte Flüssigkeit konditioniertes Wasser verwendet wird.

11. Vorrichtung nach Anspruch 1. bis 10. **dadurch gekennzeichnet, dass** die Verdrängungsluft vor, während und nach der Wasserzugabe in den Reaktor über einen am Reaktor oder Lösebehälter befindliche Öffnung durch einen Ventilator weggeführt und durch einen Filter geführt wird, der mit einer Feuchtigkeitssperre, einem Sammelbehälter sowie einem manuell betriebenen, selbstregelnden oder einem automatischen Ablassventil ausgestattet ist.

12. Vorrichtung nach Anspruch 1. bis 11. **dadurch gekennzeichnet, dass** der Reaktorboden im Deckel des darauf folgenden Lösebehälters integriert ist und der Reaktorboden vom Lösebehälter getrennt ausgeführt werden kann.

13. Vorrichtung nach Anspruch 1. bis 12. **dadurch gekennzeichnet, dass** die Einlassöffnung im Deckel bzw. die Zugabe der aus dem Reaktor dem Lösebehälter zufließende Lösung, für die bessere Trennung der sich absetzenden Stoffe von der gewünschten sedimentfreien Lösung, gegenüber der Auslassöffnung des Lösebehälters versetzt angebracht ist und der Behälterboden des Lösebehälters zum besseren Reinigen der Absetzstoffe ein Gefälle aufweißt.

14. Vorrichtung nach Anspruch 1. bis 13. **dadurch gekennzeichnet, dass** der Lösebehälter für den Reinigungsprozess mit Wasser und für das Nachfüllen von konditioniertem Wasser im Behälterdeckel zur inneren Behälterumrandung hin ein oder mehrere schräg, vertikal oder horizontal angeordnete Durchführungen mit/oder ohne Einrichtungen wie Düsen und dergleichen oder als ein oder mehrere durchgehende Schlitze besitzt.

15. Vorrichtung nach Anspruch 1. bis 14. **dadurch gekennzeichnet, dass** der Reaktor, der Lösebehälter und andere Teile der Vorrichtung rund oder eckig ausgeführt werden können und eine oder mehrere pH und Niveau-Messungen besitzen und somit die Lösung in Bezug auf den pH-Wert und Füllstand genau einstellbar ist.

16. Vorrichtung nach Anspruch 1. bis 15. **dadurch gekennzeichnet, dass** die Entnahme der Calciumhypochlorit- oder einer anderen Lösung aus dem Lösebehälter außerhalb der sich absetzenden Sedimentationsschicht durch ein oder mehrere gerade Endstücke, Bögen oder Winkel gerade, nach unten, zur Seite oder nach oben erfolgt und dadurch die Entnahme der Calciumhypochlorit- oder anderen Lösung aus dem Lösebehälter durch am Boden des Lösebehälters bildende Sedimentationsschicht nicht beeinflusst wird.

17. Vorrichtung nach Anspruch 1. bis 16. **dadurch gekennzeichnet, dass** die Sedimentationslösung nach dem Spülvorgang des Reaktors und des Lösebehälters durch eine Neutralisationsanlage und evtl. einem einfachen oder rückspülbaren Filter, die beide als Kompakteinheit ausgeführt werden können, geführt wird.

18. Vorrichtung nach Anspruch 1. bis 17. **dadurch gekennzeichnet, dass** die Vorrichtung manuell oder automatisiert ausgeführt ist und frei stehend, in einem Gestell oder in einem Schrank untergebracht werden kann.

19. Vorrichtung nach Anspruch 1. bis 18. **dadurch gekennzeichnet, dass** statt der Dosiereinrichtung für die Ausgangsfeststoffe eine Chargenmenge über eine feste räumliche Einheit gebildet werden kann, um so das Ausgangsfeststoff auch über weite Strecken mit Hilfe von Förderluft zum Reaktor führen zu können.

20. Vorrichtung nach Anspruch 1. bis 19. **dadurch gekennzeichnet, dass** sie mit einer Steuerung und mit allen für Hand- und Automatikbetrieb erforderlichen Komponenten wie Absperrungen, Meßeinrichtungen, etc. sowie allen notwendigen Sicherheitsfunktionen wie Stromabschaltung im Gefahrenfall, Leckagemeldungen und dergleichen ausgestattet ist und in Hand- und Automatikbetrieb gefahren werden kann.

21. Vorrichtung nach Anspruch 1. bis 20. **dadurch gekennzeichnet, dass** sie weitere Peripherie-Komponenten wie Dosierung des konditionierten Wassers, Dosierpumpen für Fertiglösung, etc... besitzt oder darauf hin erweitert werden kann.
